Europäisches Patentamt

European Patent Office

Office européen des brevets

(19)

(11) Publication number: **0 261 947**
**A1**

(12) **EUROPEAN PATENT APPLICATION**

(21) Application number: **87308408.1**

(22) Date of filing: **23.09.87**

(51) Int. Cl.⁴: **G 06 F 12/02**
**H 04 Q 11/04**

(30) Priority: **24.09.86 GB 8622941**

(43) Date of publication of application:
**30.03.88 Bulletin 88/13**

(84) Designated Contracting States:
**BE CH DE FR IT LI NL SE**

(71) Applicant: **The General Electric Company, p.l.c.**
**1 Stanhope Gate**
**London W1A 1EH (GB)**

(72) Inventor: **Niblock, John Andrew**
**"Nimbrethil" 56a, Birchley Heath Road**
**Birchley Heath Nuneaton Warks. CV10 0QY (GB)**

Milner, Christopher John Lyon
**"The Everglades" Sawbridge Road Grandborough**
**Rugby Warwickshire CV23 8DN (GB)**

Teasdale, David John
**29 Binley Close Shirley**
**Solihull West Midlands B90 2RB (GB)**

Boyle, Timothy John
**5, Bridgeacre Gardens**
**Binley Coventry CV3 2NQ (GB)**

Wilson, Alan Stuart
**5 Shillingstone Close**
**Walsgrave Coventry CV2 2JQ (GB)**

(74) Representative: **MacKenzie, Ian Alastair Robert**
**The General Electric Company, p.l.c. Central Patent**
**Department Wembley Office Hirst Research Center East**
**Lane**
**Wembley Middlesex HA9 7PP (GB)**

(54) **Computer system.**

(57) The invention concerns a computer system in which a main processor (10) can communicate with one or more peripherals (13) via a bi-directional data bus (11) having a width restriction. An Input/Output controller (12) contains control and status registers and is responsive to the range of bus (11), this bus range being split into a number of areas each representing one of the software processes which is to communicate with a peripheral (13).

Fig.1

**Description**

Computer System

The present inventions concerns computer systems and in particular, though not exclusively, computer systems used in the control of digital data transmission in a digital telephone exchange. The computer systems with which the present invention is concerned all include a main processor which in operation has to access one or more peripheral units containing complex microprocessor circuitry and in which address restrictions exist on the I/O (Input/ Output) interface between the main processor and the or each peripheral. It is to be realised that the use of the term "main processor" does not automatically imply that the main processor is either more powerful, or has greater memory capacity than the of each of the peripherals. Thus in the context of this specification "main processor" is used in a hierarchical sense.

Accordingly the present invention has for an object to provide a computer system of the type discussed hereinbefore in which the problem of addressing peripherals over an I/O interface having address restrictions is met in a relatively advantageous manner.

Accordingly the present invention consists in a computer system comprising a main processor having a bi-directional parallel data highway, one or more peripheral units, the or each peripheral unit having a random access memory and an associated processor and an Input/Output controller for controlling access between the main processor and the or each peripheral unit, and wherein the Input/Output controller contains control and status registers and is responsive to the Input/Output bus address range emerging from the main processor, this bus address range being split into a number of areas, each area representing one of the software processes which is to communicate with a peripheral, each area being further subdivided so that one part thereof is reserved for message transfer from the main processor to the associated peripheral while the other part is reserved for messages transferred from that peripheral to the main processor.

In order that the invention may be more readily understood, an embodiment thereof will now be described by way of example and with reference to the accompanying drawings, in which

    Figure 1 is a block diagram showing a computer system according to the present invention,

    Figure 2 is a block diagram showing the addressing method used in the system of Figure 1, and

    Figure 3 shows in diagrammatic form a method of indicating the availability of a message.

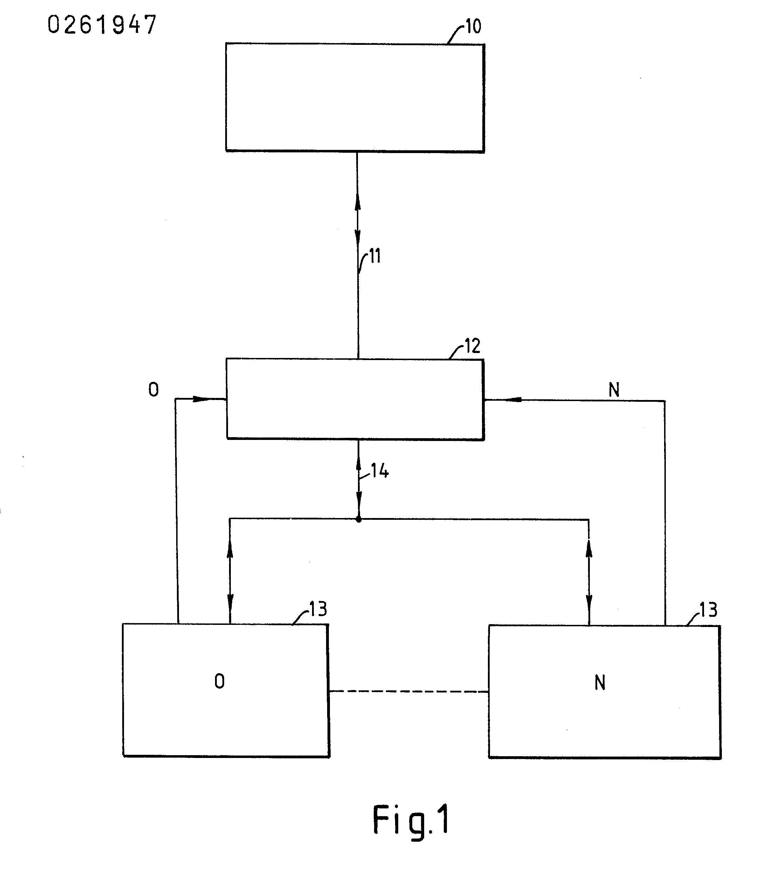

Referring now to Figure 1 of the drawings, this shows a main processor 10 and an I/O bi-directional bus 11 emerging from the main processor 10. In the present embodiment this I/O bus 11 can carry in parallel 16 data bits. There are also 13 address bits provided, giving an 8 K word address range. It will be appreciated that these figures are given by way of example only and that other configurations may be used.

The I/O bus 11 is connected to a set of circuitry 12 called an Input/Output Controller (IOC). The IOC 12 contains control and status registers and sequences the functions associated with Input /Output accesses from the I/O bus 11. The IOC circuit 12 can either sequence the access from the main processor 10 through to one of the peripheral units 13, or can initiate its own accesses via an IOC bus 14 to the peripheral units 13. These IOC accesses are performed for accessing status information from the peripherals 13.

The I/O bus address range emerging from the main processor 10 is split into a number of equal areas. Each of the areas represents one of the software processes which need to communicate with a peripheral 13. Each area is then further subdivided into half with one half being reserved for message transfer from the main processor 10 to a peripheral 13 while the other half is reserved for messages transferred from the peripheral to the main processor 10.

These half areas are called "windows". Within each window there are allocated reserve addresses for performing controlling functions. These addresses may or may not have associated data fields.

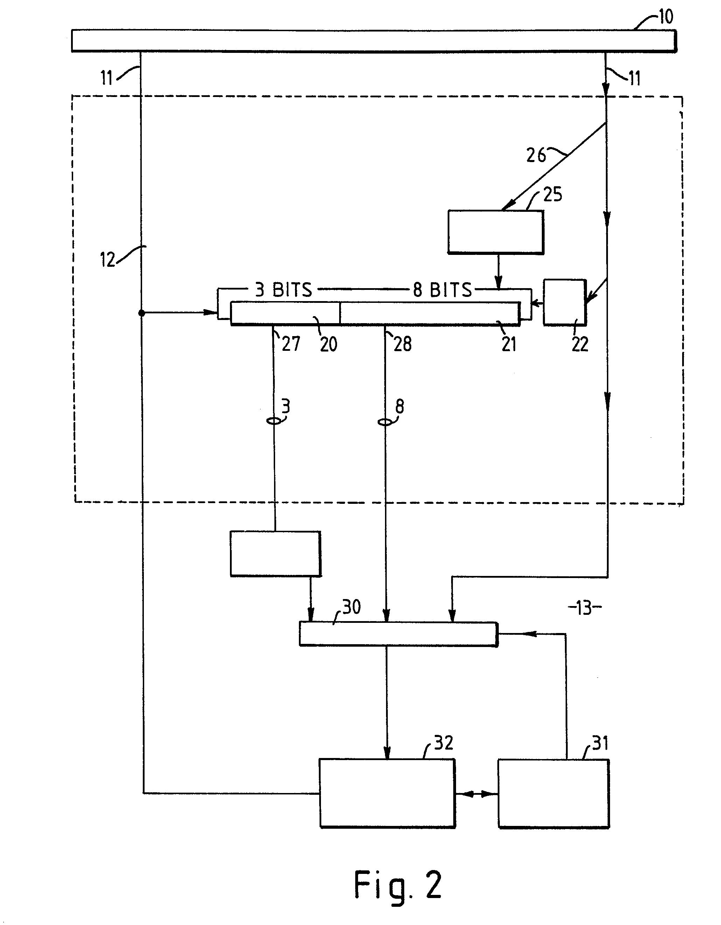

In the system being described it will be appreciated that before a message can be transferred in any direction the appropriate software process running on the main processor 10 must write to a control register in the IOC 12 which is associated with that window. The appropriate IOC control register has two fields. These fields are indicated in Figure 2 of the drawings where the main processor is again shown at 10 and the IOC circuit is generally indicated at 12. As before the main I/O bus is shown at 11. Thus each register in the IOC circuit 12 contains two fields which are shown in Figure 2 at 20 and 21 respectively. Field 20 is called the Peripheral number field and allows the address to be decoded by the correct peripheral for which the message is to be read/written. Field 21 is called the Message Type and identifies the particular message queue of that peripheral from which the message will be read or to which it will be written. In the present embodiment the Peripheral number field is 3 bits and the Message Type 8 bits. It is thus possible to use the peripheral number field to select one from upto eight peripherals. One address within the actual window is reserved for writing data to the control register and is recognised by the address register decoder 22. The control register within the IOC circuit 12 appropriate to the particular window is selected by a 5 bit control register selector 25. This means that in the present embodiment there can be a maximum of 32 control registers in the IOC circuit 12.

It can also be seen from Figure 2 that 8 bits of the address on bus 11 are displaced and are routed directly to the peripheral 13.

Thus the five control register select address lines, shown at 26, are decoded by the control register selector 25 and the data stored in the selected control register is driven onto the peripheral select address lines 27 and message type address lines 28 down to the peripheral.

Each peripheral contains a base register control circuit 30 which is set up by firmware running on a microprocessor 31. This base register control circuit 30 contains an address which is set to point to an address within the peripheral RAM 32 as will now be described. This address is known as a long base pointer and is constituted by the firmware associated with the peripheral plus the 8 bit displacement from the main processor 10. This long base pointer is selected by the 5 bit type field from the appropriately selected control register in the IOC circuit 12, there being a set of different base registers in each peripheral.

If the message type is one which involves a message transfer from the main processor to the peripheral, the address in the peripheral RAM points to the next empty memory location within the associated queue in the RAM 32.

On the other hand if the message type is one which involves a message transfer from the peripheral to the main processor, the address points to the first location of the next message to be transferred.

When a read or write access is initiated to a selected peripheral, the base register control circuit 30 evaluates the memory address by adding the base register value to the displacement which is received from the IOC 12.

Another feature of the computer system being described is that all outgoing messages from the main processor 10 are routed to what is called a barrel queue in the RAM of the chosen peripheral. This is an area of memory which when full rolls around to the start of the memory and continues filling from that point again. This procedure is called wrap-around. To detect when the queue is full three pointers are required, a Start of Available Memory Space pointer (SAMS), an End of Available Memory Space pointer (EAMS) and a NEXT SAMS pointer. When a message is removed from the queue the EAMS pointer is updated to indicate the memory space made available by this. Likewise when a message block has been added to the queue the SAMS pointer is updated to indicate the change in the memory space available. The NEXT SAMS contains the Start of Available Memory Space address after the present message has been passed. This pointer may be updated by a F/W firmware process to include a F/W message in the outgoing queue.

To detect Queue-full, a test must be performed. Each transfer is made to an absolute displacement address from zero, where zero is the first word address and 'N' is the last. Certain displacement addresses are reserved for control functions. One address is reserved to indicate the beginning of a new message. The data passed on this first transfer is the total length of the whole message. On the first transfer, the message length is added to NEXT SAMS to generate a resultant. The NEXT SAMS and EAMS pointers are compared to detect which is the larger value. Likewise the resultant is compared with EAMS to detect which is the larger.

The results of these comparisons, taken with the carry out status of the added values can be used to perform 'Q-full detection'. If Q-full is detected then the whole message is discarded until the next start of new message access. If Q-full is not detected the resultant is stored as the new NEXT SAMS and the old NEXT SAMS is stored as the new SAMS.

During Q-full detection there are two cases to be considered:

Case 1, where EAMS is greater than SAMS. If there is a carry generated during the addition, Q-full is immediately detected. In the case of no carry, the resultant must be compared with EAMS. If EAMS is greater, Q-full is not detected, if EAMS is less than or equal to the resultant, Q-full is detected.

Case 2, where SAMS is greater than or equal to EAMS. If there is no carry, Q-full is not detected. If there is a carry generated then the resultant comparison must be considered. If the resultant is greater than or equal to EAMS, then Q-full is detected. If EAMS is greater then no Q-full is detected. If any of the above, if Q-full has been detected, the access must not be allowed, as such an access would over-write an existing message in the queue.

A second address within the window is reserved for use at the end of a message block transfer within a window. This write only address is written to by the main processor software when it has finished transferring a block of a message. The access is directed to the peripheral, and is decoded by the base register control circuit. The length of the block transferred within the window is added to SAMS to generate a new value of SAMS.

A further write access is performed by the main processor software to the first memory location within the window. This location is always left as zero within the message, and the main processor software writes a value which corresponds to one of the following states: a complete message; the first part of a message; a continuation part of a message; the last part of a message. This mechanism allows for the transfer of messages which are longer than the maximum window size. The peripheral microprocessor firmware will periodically scan this location, and detects when messages or part-messages are available. The message or part-message is then extracted by the firmware. The firmware will then know that either the message has been read by the main processor, or that a new message is waiting to be processed.

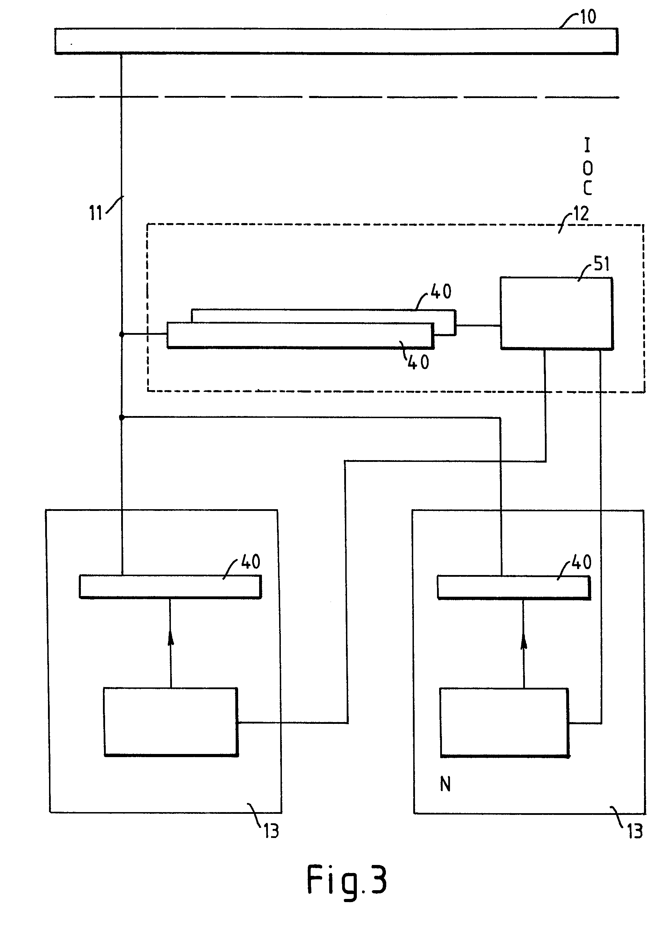

A special mechanism is provided for indicating to the main processor that a message is available in a queue on a peripheral to be transferred to the main processor. The arrangement for this is shown in Figure 3.

Each peripheral is equipped with an incoming (peripheral to main processor) message available register 40. This register 40 contains one bit for each main processor software module which can access that peripheral. The data in the message available register is set by the firmware running on the peripheral's microprocessor when it has set up an incoming message in the queue, and has set up the base register with the address.

A further set of message available registers 50 are provided in the IOC 12. Each IOC message available register 50 contains one bit for each peripheral unit 13 that can be equipped. One register 50 is provided for each main processor software process, and appears in each incoming "window".

When the peripheral microprocessor has set up an incoming message and the message available register 50 as described above, it activates a "nudge" signal which goes to the control sequencer 51 on the IOC. This causes the sequencer 51 to initiate an access on the IOC bus, and read the contents of the appropriate peripheral message available register 40. The data returned is used to control the setting of the bit corresponding to that peripheral in each IOC message available register.

Each software process running on the main processor can, therefore, ascertain the incoming message availability for all peripherals status by a single read of the IOC.

The clearing of the bits in the message available registers of the IOC and their peripherals is done when the main processor software module writes to the reserved address within the window to indicate that the message has been successfully transferred.

## Claims

1. A computer system comprising a main processor (10) having a bi-directional data highway (11) and a peripheral unit having a random access memory (32) and an associated processor (31), and characterised in that the system includes an input/output controller (12) for controlling access between the main processor (10) and the peripheral unit, and in that the peripheral controller (12) contains a control register and a status register, and input/output controller being responsive to the bus address range emerging from the main processor (10), the bus address range being split into a number of areas, each area representing one of the software processes which is to communicate with the peripheral, each area being further sub-divided into two parts, one part being reserved for message transfer from the main processor to the peripheral whilst the other part is reserved for messages transferred from the peripheral to the main processor.

2. A computer system as claimed in Claim 1, and further characterised in that each part area constitutes a window defining a moveable set of locations within the peripherals RAM access memory.

3. A computer system as claimed in Claim 2, and further characterised in that each window has its parameters defined by a control register in said input/output controller (12).

4. A computer system as claimed in Claim 3, and further characterised in that there are a plurality of peripherals (13) each with an associated processor (31) and RAM memory (32), and in that the control register of the input/output controller also specifies the identity of a selected peripheral and the appropriate base register in that peripheral.

5. A computer system as claimed in either Claim 3 or Claim 4, and further characterised in that all outgoing messages from the main processor destined to be read into a peripheral member under the control of said input/output controller (12) are read into an area of the peripheral memory which is organised as a barrel-queue.

6. A computer system as claimed in Claim 5, and further characterised in that detection of the state of the queue in the or each barrel-queue area is achieved by three pointers associated with the queue, namely a Start of Available Memory Space pointer (SAMS), an End of Available Memory Space pointer (EAMS) and a NEXT SAMS pointer, the arrangement being such that when a message is removed from the queue the EAMS pointer is updated to indicate the memory space made available, when a memory block has been added the SAMS pointer is updated.

22.12.87

0261947

Fig.1

0261947

Fig. 2

0261947

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 539 637 (DE BRULER)<br>* Figures 1,4; column 4, line 63 - column 6, line 55; column 10, line 23 - column 12, line 35 * | 1,4 | G 06 F 12/02<br>H 04 Q 11/04 |
| A | | 2,3,5 | |
| Y | IEEE JOURNAL ON SELECTED AREAS IN COMMUNICATIONS, vol. SAC-4, no. 1, January 1986, pages 192-199, IEEE, New York, US; A. NIWA et al.: "A 32-Bit custom VLSI processor for communications network nodes"<br>* Figures 1,2; page 193, right-hand column, lines 19-24 * | 1,4 | |
| Y | US-A-4 249 240 (BARNICH)<br>* Figure 3; column 4, lines 10-19 * | 1,4 | |
| A | COMPUTER DESIGN, vol. 20, no. 10, October 1981, pages 179-184, Winchester, Mass., US; W.S. ANG: "Common element key to multiprocessor architecture"<br>* Figures 1-3; page 182, left-hand column, line 12 - page 184 * | 1,4 | **TECHNICAL FIELDS SEARCHED (Int. Cl.4)**<br><br>G 06 F 12/02<br>G 06 F 12/06<br>H 04 Q 11/04 |

The present search report has been drawn up for all claims

| Place of search | Date of completion of the search | Examiner |
|---|---|---|
| THE HAGUE | 15-12-1987 | LEDRUT P. |

EPO FORM 1503 03.82 (P0401)